(19) Europäisches Patentamt
European Patent Office
Office européen des brevets

(11) EP 3 205 677 B1

(12) EUROPEAN PATENT SPECIFICATION

(45) Date of publication and mention of the grant of the patent:
**27.03.2019 Bulletin 2019/13**

(21) Application number: **17153546.1**

(22) Date of filing: **27.01.2017**

(51) Int Cl.:
***C08F 220/28*** *(2006.01)*
***C08F 220/34*** *(2006.01)*
***C08F 220/58*** *(2006.01)*
***B33Y 80/00*** *(2015.01)*
***B33Y 70/00*** *(2015.01)*

(54) **SOLID FREEFORM FABRICATION MATERIAL, SOLID FREEFORM FABRICATION MATERIAL SET, METHOD OF MANUFACTURING SOLID FREEFORM FABRICATION OBJECT, AND DEVICE FOR MANUFACTURING SOLID FREEFORM FABRICATION OBJECT**

FESTFREIFORMFERTIGUNGSMATERIAL, FESTFREIFORMFERTIGUNGSMATERIALSATZ, VERFAHREN ZUR HERSTELLUNG EINES FESTFREIFORMFERTIGUNGSOBJEKTS UND VERFAHREN ZUR HERSTELLUNG EINES FESTFREIFORMFERTIGUNGSOBJEKTS

MATÉRIAU DE FABRICATION DE FORME LIBRE SOLIDE, ENSEMBLE DE MATÉRIAU DE FABRICATION DE FORME LIBRE SOLIDE, PROCÉDÉ DE FABRICATION D'UN OBJET DE FABRICATION DE FORME LIBRE SOLIDE ET DISPOSITIF DE FABRICATION D'UN OBJET DE FABRICATION DE FORME LIBRE SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2016 JP 2016024085**

(43) Date of publication of application:
**16.08.2017 Bulletin 2017/33**

(73) Proprietor: **Ricoh Company, Ltd.**
**Tokyo 143-8555 (JP)**

(72) Inventors:
- **NARUSE, Mitsuru**
  **Ohta-ku, Tokyo 143-8555 (JP)**
- **HIGUCHI, Shinzo**
  **Ohta-ku, Tokyo 143-8555 (JP)**
- **SAITO, Akira**
  **Ohta-ku, Tokyo 143-8555 (JP)**
- **SUZUKI, Yasuo**
  **Ohta-ku, Tokyo 143-8555 (JP)**
- **TAMOTO, Nozomu**
  **Ohta-ku, Tokyo 143-8555 (JP)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(56) References cited:
**EP-A1- 1 803 750**
**WO-A1-2015/108768**
**CN-A- 103 093 965**
**US-A1- 2005 200 039**
**US-A1- 2014 326 458**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND

Technical Field

The present invention relates to a solid freeform fabrication material, a solid freeform fabrication material set, a method of manufacturing a solid freeform fabrication object, and a device for manufacturing a solid freeform fabrication object.

Description of the Related Art

As the solid freeform fabrication technologies, for example, fused deposition modeling (FDM) is used.

In manufacturing a solid freeform fabrication object by FDM, a resin composition having a filament-like form as a solid freeform fabrication material is conveyed to a heating head, where the solid freeform fabrication material is melt and fused and discharged to form a solid freeform fabrication material layer having a predetermined form. This solid freeform fabrication material layer is formed repeatedly to obtain a target 3D object.

In this case, another resin composition having a filament-like form as a support forming material is used to form a support forming material layer in the same manner as in the forming of the solid freeform fabrication material layer while supporting the solid freeform fabrication material layer. According to this lamination, for example, a cup having a shape broadening to the lamination direction or a torus object such as a handle of a cup can be obtained.

The support forming material is required to have formability. In addition, the support forming material is also required to have heat-melting property and heat-resistance taking into account of supporting the solid freeform fabrication material during fabrication and be easily removed considering removal of the support forming material from the solid freeform fabrication object after the fabrication.

As the support forming material having these property, water-soluble resin filaments such as water-soluble polyvinyl alcohol filament are known. The support formed by utilizing this water-solubility of the water-soluble resin filament is dissolved in water and removed from the solid object.

Also, a composition has been proposed which includes a plasticizer and a base polymer as a copolymer resin formed of methacrylic acid and methyl methacrylate. The base copolymer includes carboxylic acid and is dissoluble in an alkali solution.

CN 103093965 discloses a quasi-solid-state polymer gel electrolyte and a preparation method of the quasi-solid-state polymer gel electrolyte.

EP 1 803 750 discloses surface-treating agents, surface-treated powders and cosmetics comprising the same, and, in particular, relates to the improvement of hydrophobicity and rinsability of the powder used in cosmetics.

US 2014/0326458 discloses a process for enhanced oil recovery employing an aqueous solution comprising at least one linear or structured water-soluble copolymer obtained by polymerization.

US 2005/0200039 discloses materials and methods for freeform fabrication of a solid three-dimensional object.

WO 2015/108768 discloses a three-dimensionally printed article comprising a build material and a support material, the support material comprising a hydroxypropyl methylcellulose.

SUMMARY

According to the present invention, provided is an improved method of manufacturing a solid freeform fabrication object in accordance with claim 1; a solid freeform fabrication set in accordance with claim 9; and a device for manufacturing a solid freeform fabrication object in accordance with claim 10.

BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

FIG. 1A is a planar diagram illustrating an example of a solid object fabricated using a support forming material;
FIG. 1B is a cross section illustrating the solid object illustrated in FIG. 1A about A - A’ line; and
FIG. 1C is a schematic cross section illustrating a removal process of the support of the solid object illustrated in FIG. 1B.

DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Solid Freeform Fabrication Material

The solid freeform fabrication material of the present disclosure has a dissolution starting point in a pH range of 7.5 - 10 and preferably includes a pH responsive resin having a dissolution starting point in a pH range of 7.5 - 10 and optionally other components. Solid freeform fabrication includes additive manufacturing, etc.

The dissolution starting point means a pH at which a solid freeform fabrication material starts being dissolved in an aqueous solution at 25 degrees C while changing the pH of the aqueous solution from acid to base. The pH at which the solid freeform fabrication material starts being dissolved means a pH at which 1.0 g of a solid freeform fabrication material is added to 100 mL of the aqueous solution at 25 degrees C at a certain pH followed by being stirred and mixed for 15 hours and thereafter the insoluble matter (the solid freeform fabrication material after the addition) is dried and the mass change of the solid freeform fabrication material before and after the addition surpasses 5 percent by mass.

The mass change of the solid freeform fabrication material before and after the addition is obtained by the following relation.

$$\text{Mass change (percent by mass)} = \{(\text{mass of the solid freeform fabrication material before addition} - \text{mass of the solid freeform fabrication material after addition}) / \text{mass of the solid freeform fabrication material before addition}\} \times 100$$

The ratio of the maximum to the minimum (maximum / minimum) of the mass change of a solid freeform fabrication material is preferably 10 or greater in the pH range of (the dissolution starting point -0.5) to (the dissolution starting point +0.5).

The mass of the solid freeform fabrication material can be measured using, for example, an electronic scale (GR-700, manufactured by A&D Company, Limited).

The solid freeform fabrication material can be used as a solid freeform fabrication forming material and a support forming material (i.e., support for a solid freeform fabrication object) to manufacture a solid freeform fabrication object. It is preferable to use as the support forming material.

The solid freeform fabrication material can be suitably used for a manufacturing device for a solid freeform fabrication object by fused deposition modeling (FDM) methods.

The solid freeform fabrication material can be easily and safely removed by a weak alkali aqueous solution (for example, pH: 7.5) such as soap water. If the material is stored in a high temperature and high humidity environment, conveying property (i.e., supplying property) and discharging stability are excellent.

Due to these properties, conveying property and discharging stability become excellent and supports can be easily and safely removed if the material is stored in a high temperature and high humidity environment. This is not obtained by typical water-soluble filament or a strong alkali-soluble filament.

Normally, the moisture contained in air in a high temperature and high humidity environment indicates neutrality or weak acidity of a pH of 7.0 or lower because carbon dioxide in the atmosphere is dissolved in the moisture.

The solid freeform fabrication material of the present disclosure can prevent moisture absorption better even if stored in a high temperature and high humidity environment in comparison with typical water-soluble filament because the solid freeform fabrication material has no dissolution starting point in a pH range of 7.0 or lower.

Therefore, if a solid freeform fabrication material stored in a high temperature and high humidity environment is used, conveyance defects ascribable to softening of the solid freeform fabrication material do not occur in a manufacturing device of solid freeform fabrication objects. Moreover, it is possible to prevent occurrence of unstable discharging of melted resins caused by evaporation of the moisture which is taken in the solid freeform fabrication material due to moisture absorption in a heating head.

As the forms of the solid freeform fabrication material, for example, filament-like form, tablet-like form, powder form, and granule form are suitable.

The average diameter of the filament-like form has no particular limit and can be suitably selected to suit to a particular application. For example, it is preferably 1 - 5 mm and more preferable 1.75 - 3 mm.

pH of the dissolution starting point is 7.5 - 10 and preferably 8 - 10. When the pH is 7.5 - 10, it is possible to

easily dissolve a solid freeform fabrication material.

pH can be measured by a pH meter (HM-30R, manufactured by DKK-TOA CORPORATION).

pH of typical tapped water in Japan is 6 - 8. When pH of the tapped water is 7.0 or lower, the pH responsive resin is not easily dissolved in the tapped water so that is it not easily removed.

If pH of the dissolution starting point is within the range of 7.5 - 10, the pH responsive resin is not dissolved in the moisture demonstrating weak acidity contained in the air in a high temperature and high humidity environment. Accordingly, the pH responsive resin does not absorb so that conveyance defects ascribable to softening (excessively soft and flexible) of the solid freeform fabrication material do not occur in a manufacturing device of solid freeform fabrication objects. Moreover, it is possible to prevent occurrence of unstable discharging of melted resins caused by evaporation of the moisture taken in the solid freeform fabrication material due to moisture absorption in a heating head.

pH Responsive Resin

The pH responsive resin preferably has a dissolution starting point in a pH range of 7.5 - 10.

In addition, pH of the aqueous solution at 25 degrees C to dissolve the pH responsive resin can be determined based on the dissolution starting point of a resin to be used.

It is preferable to determine the pH in the range of the dissolution starting point to 10 and more preferable to be 8 -10. When the pH is from the dissolution starting point to 10, it is possible to easily dissolve a solid freeform fabrication material.

The pH of the dissolution starting point is 7.5 - 10. Therefore, in an environment where pH is lower than 7.5, for example, storage environment, the pH responsive resin does not collapse. However, it is easy to collapse it in weak alkali such as soap water when removing after fabrication.

Such an aqueous solution having a pH of from the dissolution starting point to 10 can be prepared by using, for example, a pH regulating agent salt such as a higher aliphatic acid salt, acetic acid, ammonium, sodium hydroxide, calcium hydroxide, magnesium hydroxide, and calcined lime (CaO). Of these, higher aliphatic acid salts are preferable in terms of easiness and safety.

Specific examples of the higher aliphatic acid salts include, but are not limited to, lauric acid, milistic acid, palmitic acid, stearic acid, oleic acid, and sodium salts and potassium salts of higher aliphatic acid of mixed aliphatic acids of these.

As the aqueous solution having a pH of from the dissolution starting point to 10, soap water is preferable.

Soap water means an aqueous solution in which water and the higher aliphatic acid salt mentioned above are mixed.

Also, products of soap water available on the market can be used.

It is preferable that the pH responsive resin switch hydrophobicity and hydrophilicity depending on the change of pH and include at least a hydrophobic alkyl group and a hydrophobic alkylene group in its structure and a structure unit demonstrating hydrophilicity in basic conditions.

Since the hydrophobic alkyl group and the hydrophobic alkylene group are capable of imparting plasticity to the pH responsive resin, it is possible to improve flexibility without adding an additive such as a plasticizer when forming a solid freeform fabrication material in comparison with acrylic acid resins.

Specific examples of the structure unit demonstrating hydrophilicity include, but are not limited to, structure units derived from compounds including functional groups such as carboxylic group, alkylamino group, and sulfonic acid group.

Specific examples of the pH responsive resin include, but are not limited to, resins including structure units represented by the following Chemical formula 1, resins including structure units derived from N-isopropylacrylamide, and resins including structure units including dialkylamine. Of these, the resin including structure units represented by the following Chemical formula 1 and the resins including structure units including dialkylamin are preferable.

Of these, the resin including structure units represented by the following Chemical formula 1 are more preferable.

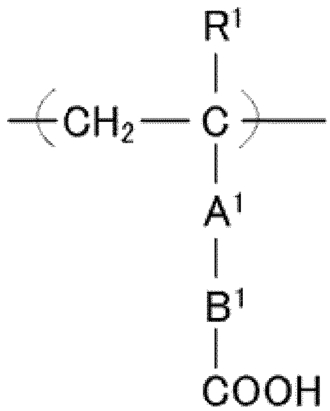

Chemical formula 1

In the Chemical formula 1, $R^1$ represents a hydrogen atom or a methyl group, $A^1$ represents -CO-O- or -CO-NH-, and $B^1$ represents an alkylene group having 4 - 23 carbon atoms.

Resin Including Structure Unit Represented by Chemical formula 1

The resin including the structure unit represented by the Chemical formula 1 has no particular limit as long as it includes the structure unit represented by the Chemical formula 1 and can be suitably selected to suit to a particular application.

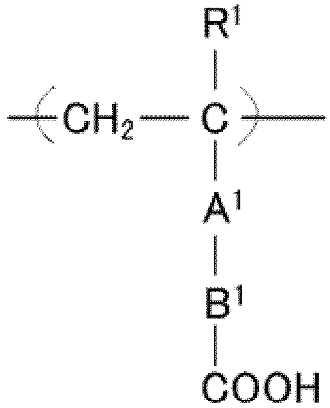

Chemical formula 1

In the Chemical formula 1, $R^1$ represents a hydrogen atom or a methyl group, $A^1$ represents -CO-O- or -CO-NH-, and $B^1$ represents an alkylene group having 4 - 23 carbon atoms.

In the Chemical formula 1, $R^1$ represents a hydrogen atom or a methyl group, $A^1$ represents -CO-O- or -CO-NH-, and $B^1$ represents an alkylene group having 4 - 23 carbon atoms and preferably an alkylene group having 7 - 11 carbon atoms. When the number of carbon atoms is 4 or more, conveying (supplying) property can be improved even when stored in a high temperature and high moisture environment. When the number of carbon atoms is 23 or less, it is possible to broaden the pH range in which the resin is dissolved. As the alkylene group, both a straight chain and a branch chain are allowed.

Specific examples of the alkylene group having 4 - 23 carbon atoms include, but are not limited to, butylene group, penthylene group, hexylene group, hepthylene group, octylene group, nonylene group, decylene group, undecylene group, dodecylene group, tetradecylene group, hexadecylene group, octadecylene group, and icosyne group.

Specific examples of the monomer having the structure unit represented by the Chemical formula 1 include, but are not limited to, acrylic acid, alkyl-substituted acrylic acid, acrylamide, and compounds with which aliphatic acids are bonded.

Specific examples of the aliphatic acids include, but are not limited to, valeric (pentanoic) acid, hexanoic acid, heptanoic acid, octanoic (octylic) acid, nonanoic acid, decanoic acid, tetradecanoic acid, pentadecanoic acid, hesadecanoic acid, heptadecanoic acid, octadecanoic acid, nonadecanoic acid, nonaeicosanoic acid, docosanoic acid, and

tricosanoic acid.

Specific examples of the resin including the structure unit represented by the Chemical formula 1 include, but are not limited to, 5-(meth)acrylamide valeric acid (pentanoic) acid homopolymers and copolymers thereof with other monomers, 6-(meth)acrylamide hexanoic acid homopolymers and copolymers thereof with other monomers, 7-(meth)acrylamide heptanoic acid homopolymers and copolymers thereof with other monomers, 8-(meth)acrylamide octanoic (octylic) acid homopolymers and copolymers thereof with other monomers, 9-(meth)acrylamide nonanoic acid homopolymers and copolymers thereof with other monomers, 10-(meth)acrylamide dodecanoic acid homopolymers and copolymers thereof with other monomers, 11-(meth)acrylamide undecanoic acid homopolymers and copolymers thereof with other monomers, 12-(meth)acrylamide dodecanoic acid homopolymers and copolymers thereof with other monomers, 14-(meth)acrylamide tetradecanoic acid homopolymers and copolymers thereof with other monomers, 15-(meth)acrylamide pentadecanoic acid homopolymers and copolymers thereof with other monomers, 16-(meth)acrylamide hexadecanoic acid homopolymers and copolymers thereof with other monomers, 17-(meth)acrylamide heptadecanoic acid homopolymers and copolymers thereof with other monomers, 18-(meth)acrylamide octadecanoic acid homopolymers and copolymers thereof with other monomers, 19-(meth)acrylamide nonadecanoic acid homopolymers and copolymers thereof with other monomers, 20-(meth)acrylamide nonaeicosanoic acid homopolymers and copolymers thereof with other monomers, 22-(meth)acrylamide docosanoic acid homopolymers and copolymers thereof with other monomers, and 23-(meth)acrylamide tricosanoic acid homopolymers and copolymers thereof with other monomers.

These can be used alone or in combination. Of these, it is preferable to have a carboxylic acid with a long chain alkyl chain in an amino group of the acrylamide backbone. 11-(meth)acrylamide undecanoic acid and 12-(meth)acrylamide dodecanoic acid are more preferable.

The structure unit represented by the Chemical formula 1 includes an alkylene group having 4 - 23 carbon atoms as the hydrophobic portion and a carboxyl group as the hydrophilic portion and it switches hydrophobicity and hydrophilicity according to the change of pH (i.e., pH responsive). Therefore, the structure unit indicates hydrophobicity from neutral to acid and hydrophilicity in basic conditions with the changing point somewhere in between pH 7.5 and pH 10. When pH is basic, H in the carboxyl group is ionized and dissolved in water.

The other monomers have no particular limit and can be suitably selected to suit to a particular application. For example, (meth)acrylic acid, copolymers of (meth)acrylic amide, copolymers of butyl(meth)acrylate, octadecyl(meth)acrylate, and compounds including the structure unit represented by the following Chemical formula 2. These can be used alone or in combination. Of these, the compound including the structure unit represented by the following Chemical formula 2 is preferable in terms that the dissolution pH range is wide and fabrication property is good. Since the pH responsive resin includes the structure unit represented by the Chemical formula 1 and the structure unit represented by the Chemical formula 2, the flexibility of the solid freeform fabrication material and the conveying (supplying) property in a manufacturing device of solid freeform fabrication objects can be improved.

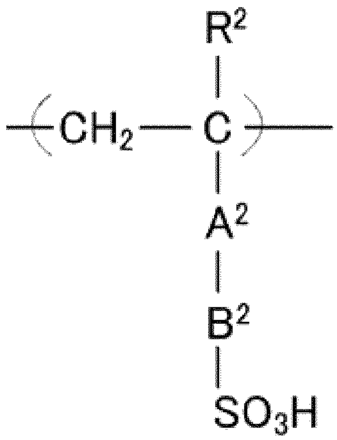

Chemical formula 2

In the Chemical formula 2, $R^2$ represents a hydrogen atom or a methyl group, $A^2$ represents -CO-O- or -CO-NH-, and $B^2$ represents an alkylene group having 1 - 4 carbon atoms.

In the Chemical formula 2, $R^2$ represents a hydrogen atom or a methyl group, $A^2$ represents -CO-O- or -CO-NH-, and $B^2$ represents an alkylene group having 1 - 4 carbon atoms.

Specific examples of the alkylene group having 1 - 4 carbon atoms include, but are not limited to, a methylene group, an ethylene group, a propylene group, and a buthylene group.

The structure unit represented by the Chemical formula 2 includes an alkylene group having 1 - 4 carbon atoms as the hydrophobic portion and a sulfonic acid group as the hydrophilic portion and switches hydrophobicity and hydrophilicity according to the change of pH (i.e., pH responsive). Therefore, it indicates hydrophobicity from neutral to acid and hydrophilicity in basic conditions with the changing point somewhere in between pH 7.5 to pH 10. When pH is basic, H in the carboxyl group is ionized and dissolved in water.

Specific examples of the resin including the structure unit represented by the Chemical formula 2 include, but are not limited to, 2-acrylamide-2-methylpropane sulfonic acid and 3-methacryloxypropane sulfonic acid. These can be used alone or in combination.

The mole number ratio (M1/M2) of the mole number (M1) of the monomer having a structure unit represented by the Chemical formula 1 to the mole number (M2) of the other monomers is preferably 50/50 - 100/0 and more preferably 80/20 - 100/0. When the mole number ratio (M1/M2) is 50/50 - 100/0, the pH range in which the pH responsive resin is dissoluble can be broadened.

Resin Including Structure Unit Derived from N-isopropyl Acrylamide

The resin including the structure unit derived from N-isopropyl acrylamide has no particular limit as long as it includes the structure unit derived from N-isopropyl acrylamide and can be suitably selected to suit to a particular application.

Examples of the compound including the structure unit derived from N-isopropyl acrylamide are homopolymers of N-isopropyl acrylamide and copolymers of N-isopropyl acrylamide and other monomers.

The other monomer has no particular limit. For example, (meth)acrylic acid, copolymers of (meth)acrylic amide, copolymers of butyl(meth)acrylate, and (meth)acrylic acid octadecyl. These can be used alone or in combination.

Resin Including Structure Unit Including Dialkylamine

The resin including a structure unit including dialkylamine has no particular limit as long as it includes the structure unit including dialkylamine and can be suitably selected to suit to a particular application.

Examples of the resin including a structure unit including dialkylamine are resins including structure units derived from (meth)acrylic acid-2-(dialkylamino)alkyl and resins including structure units derived from dialkylamine acrylamide.

Specific examples of (meth)acrylic acid-2-(dialkylamino)alkyl include, but are not limited to, (meth)acrylic acid-2-(diethylamino)ethyl, (meth)acrylic acid-2-(diethylamino)propyl, and (meth)acrylic acid-2-(diethyamino)butyl. Of these, (meth)acrylic acid-2-(diethylamino)ethyl is preferable.

The weight average molecular weight of the pH responsive resin has no particular limit as long the resin has a degree of polymerization of oligomer or higher and can be suitably selected to suit to a particular application. 5,000 to 500,000 are preferable and 100,000 to 300,000 are more preferable.

When the weight average molecular weight is 5,000 - 500,000, discharging stability can be improved. The weight average molecular weight can be obtained in standard polystyrene conversion by using gel permeation chromatography (GPC). The weight average molecular weight can be controlled by the polymerization time, temperature, polymerization inhibitors, etc.

The content of the pH responsive resin is preferably 10 - 100 percent by mass to the total content of the solid freeform fabrication material and more preferably 50 - 100 percent by mass.

Method of Manufacturing pH Responsive Resin

There is no specific limit to the method of manufacturing the pH responsive resin and it can be selected from known polymerization methods to suit to a particular application. For example, methods of manufacturing the compound including the structure unit represented by the Chemical formula 1 with optional polymerization with other monomers are suitable.

Other Components

As the other components, coloring materials, dispersants of the coloring materials, plasticizers, lubricants, crystal nucleating agents, and other known additives are also usable.

Method of Manufacturing Solid Freeform Fabrication Material

The method of manufacturing the solid freeform fabrication material has no particular limit and can be suitably selected from known methods to suit to a particular application. When an additive is added, the pH responsive resin, other resins, additives, etc., are optionally melted and mixed and the mixture is extruded to have a filament-like form using a single-shaft extruder while melting and fusing it. Thereafter, the extruded filament is reeled by a reeler to a

bobbin, etc. while cooling it down. The diameter of the filament can be controlled by extruding holes of a single shaft extruder, temperature conditions, tension conditions during reeling, etc. In addition, subsequent to cooling, while the filament is further heated, the filament can be stretched and processed by adjusting the tension conditions during reeling.

The melting and mixing method is not particularly limited and can be suitably selected from known methods to suit to a particular application. For example, methods of continuously melting and mixing each component with a twin-shaft extruder, a single-shaft extruder, a melt-fusing modeling machine, etc. or methods of melting and mixing each component per batch by a kneader, a mixer, etc., are suitable. If no additives are added, the melting and mixing process can be omitted.

Solid Freeform Fabrication Material Set

The solid freeform fabrication material set includes the solid freeform fabrication material of the present disclosure and a solid freeform fabrication material having no dissolution starting point in a pH range of 7.5 - 10, an aqueous solution having a pH of from the dissolution starting point to 10, or a precursor material thereof. The solid freeform fabrication material set may furthermore optionally include other components.

As the precursor material, it is possible to use the same pH regulating agent salts as those for use in regulating an aqueous solution having a pH of form the dissolution starting point to 10.

While using the solid freeform fabrication material of the present disclosure as the support forming material for solid freeform fabrication, a solid freeform fabrication material having no dissolution starting point in a pH range of from 7.5 - 10, an aqueous solution having a pH of from the dissolution starting point to 10, or a precursor material thereof is used as a solid freeform fabrication material (modeling material to constitute a final solid object) to make solid freeform fabrication efficient.

The solid freeform fabrication material having no dissolution starting point in a pH range of 7.5 - 10, the aqueous solution having a pH of from the dissolution starting point to 10 or the precursor material thereof for solid freeform fabrication has no particular limitation. It is possible to use known resins and other components suitable for FDM methods.

Method of Manufacturing Solid Freeform Fabrication Object and Device for Manufacturing Solid Freeform Fabrication Object

In the method of manufacturing a solid freeform fabrication object of the present disclosure, solid freeform fabrication objects can be manufactured using a solid freeform fabrication material. The method preferably includes applying an aqueous solution having a pH of from the dissolution starting point to 10 to the solid freeform fabrication object to dissolve and remove the portion constituted of the solid freeform fabrication material of the present disclosure and other optional steps.

The device for manufacturing a solid freeform fabrication object includes the solid freeform fabrication material of the present disclosure, a heating head to melt and discharge the solid freeform fabrication material, and other optional devices.

The method of manufacturing a solid freeform fabrication object of the present disclosure can be suitably executed by the device for manufacturing a solid freeform fabrication object.

The method of forming a solid freeform fabrication object using the solid freeform fabrication material of the present disclosure has no particular limit and can be suitably selected from known methods of manufacturing solid freeform fabrication objects utilizing fused deposition modeling (FDM) methods to suit to a particular application. For example, a method is suitable which includes discharging a solid freeform fabrication material while fusing and scanning it to form a solid freeform fabrication forming material layer having predetermined shapes and a support freeform fabrication forming material layer having predetermined shapes by using a printer for solid freeform fabrication as a device for manufacturing a solid freeform fabrication object and repeating this operation to laminate the layers (additive manufacturing).

FIG. 1A is a planar diagram illustrating an example of a solid freeform fabrication object fabricated by using a support forming material. FIG. 1B is a cross section illustrating the solid object illustrated in FIG. 1A about A - A' line. FIG. 1C is a schematic cross section illustrating a removal process of the support of the solid object illustrated in FIG. 1B.

In the case in which the solid freeform fabrication material (support forming material) of the present disclosure to form a support and a water-soluble resin to form a solid freeform fabrication object are used, a printer for solid freeform fabrication carrying at least two melting (heating) heads is used. One of the melting heads is used for the solid freeform fabrication material and the other for the support forming material. Using the printer for solid freeform fabrication, each material is melted and discharged by the melting head to form a support layer having a predetermined shape and a solid freeform fabrication layer having a predetermined shape and repeating this operation to obtain a solid freeform fabrication object 20. That is, the solid freeform fabrication object 20 formed of a solid freeform fabrication material has a form corresponding to at least a part of the shape of a support forming material 10 (FIG. 1B). A solid freeform object including

a support portion is dipped in an aqueous solution W having a pH of from the dissolution starting point to 10 to melt or decompose the support forming material. As a result, the support portion is easily removed from the solid object to obtain a solid freeform fabrication object free of breakage and remnants of the support forming material.

When the solid freeform fabrication material of the present disclosure is used as a support forming material for a support for a solid freeform fabrication object, it is possible to use, for example, a resin such as a polylactate (PLA) for a solid freeform fabrication material, which is dissolved in a strong alkali or hydrolyzed. After the fabrication, weak alkali water can be used to remove the support portion without degrading the properties of the portion of the solid freeform fabrication object.

The method of manufacturing a solid freeform fabrication object object and the device for manufacturing a solid freeform fabrication object are described below with reference to specific embodiments.

A solid freeform fabrication object is obtained by using a solid freeform fabrication material and the solid freeform fabrication material of the present disclosure as a support forming material.

As described above, to obtain a solid freeform fabrication object, a solid freeform fabrication material (also referred to as modeling material) is used for the fabrication portion and a support forming material (also referred to as supporting material) is disposed for the support portion.

In the manufacturing device of the solid freeform fabrication object, the solid freeform fabrication material and the support forming material are conveyed (supplied) to a heating (melting) head in a filament-like form. The conveyed solid freeform fabrication material and support forming material are heated and melted and thereafter discharged by the heating head to form a solid freeform fabrication forming material layer and a support forming material layer. This operation is repeated to fabricate a solid freeform fabrication object by additive manufacturing.

The heating temperature by the heating head is not particularly limited as long as the solid freeform fabrication material can be melted. It can be suitably selected to suit to a particular application.

First, surface data or solid data of three-dimensional form designed by three dimensional computer-aided design (CAD) or taken in by a three-dimensional scanner or a digitizer are converted into Standard Template Library (STL) format, which is thereafter input into a device for manufacturing a solid freeform fabrication object.

Based on the input data, the direction of the three-dimensional form to be formed is determined.

The direction is not particularly limited. Normally, the direction is chosen such that the Z direction (height direction) is the lowest.

After determining the direction of the fabrication, the projected areas in X-Y plane, X-Z plane, and Y-Z plane of the three-dimensional form are obtained. To reinforce the thus-obtained block form, each plane except for the upper plane of the X-Y plane is modified to the outside direction in a suitable amount. The transfer amount is not particularly limited and is, for example, about 1 mm to about 10 mm although depending on the form, the size, and the liquid material. The block form enclosing the form to be fabricated is identified except for the upper plane (the upper plane is open).

This block form is sliced in the Z direction with a thickness of a single layer. The thickness of a single layer varies depending on materials and cannot be simply determined but is preferably from 10 to 50 $\mu$m.

When only one solid object is manufactured, this block form is placed in the center of the Z stage (i.e., table on which the fabricated object is placed, the fabricated object being lowered in an amount of a single layer every time a layer is fabricated). In addition, when a plural of three-dimensional objects are fabricated at the same time, the block forms are arranged on the Z stage. Alternatively, the block forms can be piled up. It is possible to automatically create the block forms, the slice data (contour line data), and the placement on the Z stage if materials to be used are determined.

Next is the fabrication process. Referring to the outermost contour line of the slice data, the position on which a modeling material is jetted and the position on which the support material is jetted are controlled by inside-outside determination (which of the materials should be jetted on the contour line).

Having generally described preferred embodiments of this invention, further understanding can be obtained by reference to certain specific examples which are provided herein for the purpose of illustration only and are not intended to be limiting. In the descriptions in the following examples, the numbers represent weight ratios in parts, unless otherwise specified.

## EXAMPLES

Next, the present disclosure is described in detail with reference to Examples and Comparative Examples but not limited thereto.

The weight average molecular weight of each monomer is obtained in standard polystyrene conversion by using gel permeation chromatography (GPC).

### Example 1

400 g (2.16 mol) of methacrylic acid-2-(diethylamino)ethyl, and 8.87 g (0.054 mol) of azobisisobutylonitrile were

dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain methacrylic acid-2-(diethylamino)ethyl homopolymer.

The weight average molecular weight of the thus-obtained methacrylic acid-2-(diethylamino)ethyl homopolymer was 120,000.

After the thus-obtained methacrylic acid-2-(diethylamino)ethyl homopolymer was dried at 50 degrees C for 8 hours, a solid freeform fabrication material having a filament-like form with a diameter of 1.75 mm was obtained by using a 3D printer (3D filament material manufacturing extruder nozzle pro, manufactured by Nihon Binary Co., Ltd.) under the conditions of a melting temperature of 200 degrees C and a discharging speed of 0.5 m/minute.

Example 2

400 g (3.63 mol) of 5-methacrylamide valeric acid and 8.87 g (0.054 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 5-methacrylamide valeric acid homopolymer.

The weight average molecular weight of the thus-obtained 5-methacrylamide valeric acid homopolymer was 120,000.

A solid freeform fabrication material having a filament-like form with a diameter of 1.75 mm was obtained in the same manner as in Example 1 except that 5-methacrylamide valeric acid homopolymer was used instead of methacrylic acid-2-(diethylamino)ethyl homopolymer.

Example 3

400 g (3.38 mol) of 6-methacrylamide hexanoic acid and 8.87 g (0.054 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 6-methacrylamide hexanoic acid homopolymer.

The weight average molecular weight of the thus-obtained 6-methacrylamide hexanoic acid homopolymer was 130,000.

A solid freeform fabrication material having a filament-like form with a diameter of 1.75 mm was obtained in the same manner as in Example 1 except that 6-methacrylamide hexanoic acid homopolymer was used instead of methacrylic acid-2-(diethylamino)ethyl homopolymer.

Example 4

400 g (2.99 mol) of 8-methacrylamide octylic acid and 8.87 g (0.054 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 8-methacrylamide octylic acid homopolymer.

The weight average molecular weight of the thus-obtained 8-methacrylamide octylic acid homopolymer was 140,000.

A solid freeform fabrication material having a filament-like form with a diameter of 1.75 mm was obtained in the same manner as in Example 1 except that 8-methacrylamide octylic acid homopolymer was used instead of methacrylic acid-2-(diethylamino)ethyl homopolymer.

Example 5

400 g (2.53 mol) of 11-methacrylamide undecanoic acid and 8.87 g (0.054 mol) of azobisisobutylonitrile were dissolved in 1.2 kg of methanol in a vessel. Nitrogen gas was blown into the solution for degassing for 60 minutes and

the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 11-methacrylamide undecanoic acid homopolymer.

The weight average molecular weight of the thus-obtained 11-methacrylamide undecanoic acid homopolymer was 150,000.

A solid freeform fabrication material having a filament-like form with a diameter of 1.75 mm was obtained in the same manner as in Example 1 except that 11-methacrylamide undecanoic acid homopolymer was used instead of methacrylic acid-2-(diethylamino)ethyl homopolymer.

Example 6

400 g (2.53 mol) of 12-methacrylamide dodecanoic acid and 8.87 g (0.054 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours.

After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 12-methacrylamide dodecanoic acid homopolymer. The weight average molecular weight of the thus-obtained 12-methacrylamide dodecanoic acid homopolymer was 150,000.

A solid freeform fabrication material having a filament-like form with a diameter of 1.75 mm was obtained in the same manner as in Example 1 except that 12-methacrylamide dodecanoic acid homopolymer was used instead of methacrylic acid-2-(diethylamino)ethyl homopolymer.

Example 7

400 g (2.68 mol) of 12-acrylamide dodecanoic acid and 8.87 g (0.054 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 12-acrylamide dodecanoic acid homopolymer.

The weight average molecular weight of the thus-obtained 12-acrylamide dodecanoic acid homopolymer was 150,000.

A solid freeform fabrication material having a filament-like form with a diameter of 1.75 mm was obtained in the same manner as in Example 1 except that 12-acrylamide dodecanoic acid homopolymer was used instead of methacrylic acid-2-(diethylamino)ethyl homopolymer.

Example 8

400 g (1.57 mol) of 23-methacrylamide tricosanoic acid, 8.87 g (0.054 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 23-methacrylamide tricosanoic acid homopolymer.

The weight average molecular weight of the thus-obtained 23-methacrylamide tricosanoic acid homopolymer was 170,000.

A solid freeform fabrication material having a filament-like form with a diameter of 1.75 mm was obtained in the same manner as in Example 1 except that 23-methacrylamide tricosanoic acid homopolymer was used instead of methacrylic acid-2-(diethylamino)ethyl homopolymer.

Example 9

380 g (2.4 mol) of 11-methacrylamide undecanoic acid, 27 g (0.13 mol) of 2-acrylamide-2-methylpropane sulfonic acid, 2.56 g (0.064 mol) of sodium hydroxide, and 8.87 g (0.054 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and

the thus-obtained solution was dripped to diethylether. The precipitate was collected by suction filtration to obtain 11-methacrylamide undecanoic acid-2-acrylamide-2-methylpropane sulfonic acid (95/5 in molar ratio) copolymer. The weight average molecular weight of the thus-obtained 11-methacrylamide undecanoic acid-2-acrylamide-2-methylpropane sulfonic acid copolymer was 150,000.

A solid freeform fabrication material having a filament-like form with a diameter of 1.75 mm was obtained in the same manner as in Example 1 except that 11-methacrylamide undecanoic acid-2-acrylamide-2-methylpropane sulfonic acid copolymer was used instead of methacrylic acid-2-(diethylamino)ethyl homopolymer.

Example 10

Synthesis of Resin

360 g (2.28mol) of 11-methacrylamide undecanoic acid, 54 g (0.253 mol) of 2-acrylamide-2-methylpropane sulfonic acid, 5.12 g (0.128 mol) of sodium hydroxide, and 8.87 g (0.054 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 11-methacrylamide undecanoic acid-2-acrylamide-2-methylpropane sulfonic acid (90/10) in molar ratio) copolymer.

The weight average molecular weight of the thus-obtained 11-methacrylamide undecanoic acid-2-acrylamide-2-methylpropane sulfonic acid (molar ratio: 90/10) copolymer was 160,000.

A solid freeform fabrication material having a filament-like form with a diameter of 1.75 mm was obtained in the same manner as in Example 1 except that 11-methacrylamide undecanoic acid-2-acrylamide-2-methylpropane sulfonic acid (molar ratio: 90/10) copolymer was used instead of methacrylic acid-2-(diethylamino)ethyl homopolymer.

Example 11

Synthesis of Resin

380 g (2.4 mol) of 11-methacrylamide undecanoic acid, 27 g (0.13 mol) of 2-acrylamide-2-methylpropane sulfonic acid, 2.56 g (0.064 mol) of sodium hydroxide, and 0.45 g (0.054 mol) of 2,2-azobis(2,4-dimethyl valeronitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 11-methacrylamide undecanoic acid-2-acrylamide-2-methylpropane sulfonic acid (90/10) in molar ratio) copolymer.

The weight average molecular weight of the thus-obtained 11-methacrylamide undecanoic acid-2-acrylamide-2-methylpropane sulfonic acid (molar ratio: 95/5) copolymer was 5,000.

A solid freeform fabrication material having a filament-like form with a diameter of 1.75 mm was obtained in the same manner as in Example 1 except that 11-methacrylamide undecanoic acid-2-acrylamide-2-methylpropane sulfonic acid (molar ratio: 95/5) copolymer was used instead of methacrylic acid-2-(diethylamino)ethyl homopolymer.

Example 12

380 g (2.4 mol) of 11-methacrylamide undecanoic acid, 27 g (0.13 mol) of 2-acrylamide-2-methylpropane sulfonic acid, 2.56 g (0.064 mol) of sodium hydroxide, and 10.24 g (0.062 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 11-methacrylamide undecanoic acid-2-acrylamide-2-methylpropane sulfonic acid (95/5) in molar ratio) copolymer.

The weight average molecular weight of the thus-obtained 11-methacrylamide undecanoic acid-2-acrylamide-2-methylpropane sulfonic acid (molar ratio: 95/5) copolymer was 29,000.

A solid freeform fabrication material having a filament-like form with a diameter of 1.75 mm was obtained in the same manner as in Example 1 except that 11-methacrylamide undecanoic acid-2-acrylamide-2-methylpropane sulfonic acid (molar ratio: 95/5) copolymer was used instead of methacrylic acid-2-(diethylamino)ethyl homopolymer.

Example 13

380 g (2.4 mol) of 11-methacrylamide undecanoic acid, 27 g (0.13 mol) of 2-acrylamide-2-methylpropane sulfonic acid, 2.56 g (0.064 mol) of sodium hydroxide, and 10.50 g (0.064 mol) of azobisisobutylonitrile were dissolved in 1.2 kg of methanol in a vessel. Nitrogen gas was blown into the solution for degassing for 60 minutes and the vessel was sealed by a septum followed by polymerization at 55 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 11-methacrylamide undecanoic acid-2-acrylamide-2-methylpropane sulfonic acid (95/5) in molar ratio) copolymer.

The weight average molecular weight of the thus-obtained 11-methacrylamide undecanoic acid-2-acrylamide-2-methylpropane sulfonic acid (molar ratio: 95/5) copolymer was 52,000.

A solid freeform fabrication material having a filament-like form with a diameter of 1.75 mm was obtained in the same manner as in Example 1 except that 11-methacrylamide undecanoic acid-2-acrylamide-2-methylpropane sulfonic acid (molar ratio: 95/5) copolymer was used instead of methacrylic acid-2-(diethylamino)ethyl homopolymer.

Example 14

380 g (2.4 mol) of 11-methacrylamide undecanoic acid, 27 g (0.13 mol) of 2-acrylamide-2-methylpropane sulfonic acid, 2.56 g (0.064 mol) of sodium hydroxide, and 9.90 g (0.060 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 11-methacrylamide undecanoic acid-2-acrylamide-2-methylpropane sulfonic acid (95/5 in molar ratio) copolymer. The weight average molecular weight of the thus-obtained 111-methacrylamide undecanoic acid-2-acrylamide-2-methylpropane sulfonic acid (95/5 in molar ratio) copolymer was 52,000.

A solid freeform fabrication material having a filament-like form with a diameter of 1.75 mm was obtained in the same manner as in Example 1 except that 11-methacrylamide undecanoic acid-2-acrylamide-2-methylpropane sulfonic acid (molar ratio: 95/5) copolymer was used instead of methacrylic acid-2-(diethylamino)ethyl homopolymer.

Example 15

380 g (2.4 mol) of 11-methacrylamide undecanoic acid, 27 g (0.13 mol) of 2-acrylamide-2-methylpropane sulfonic acid, 2.56 g (0.064 mol) of sodium hydroxide, and 9.39 g (0.057 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 11-methacrylamide undecanoic acid-2-acrylamide-2-methylpropane sulfonic acid (95/5) in molar ratio) copolymer.

The weight average molecular weight of the thus-obtained 11-methacrylamide undecanoic acid-2-acrylamide-2-methylpropane sulfonic acid (molar ratio: 95/5) copolymer was 110,000.

A solid freeform fabrication material having a filament-like form with a diameter of 1.75 mm was obtained in the same manner as in Example 1 except that 11-methacrylamide undecanoic acid-2-acrylamide-2-methylpropane sulfonic acid (molar ratio: 95/5) copolymer was used instead of methacrylic acid-2-(diethylamino)ethyl homopolymer.

Example 16

380 g (2.4 mol) of 11-methacrylamide undecanoic acid, 27 g (0.13 mol) of 2-acrylamide-2-methylpropane sulfonic acid, 2.56 g (0.064 mol) of sodium hydroxide, and 7.00 g (0.042 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 30 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 11-methacrylamide undecanoic acid-2-acrylamide-2-methylpropane sulfonic acid (95/5) in molar ratio) copolymer.

The weight average molecular weight of the thus-obtained 11-methacrylamide undecanoic acid-2-acrylamide-2-methylpropane sulfonic acid (molar ratio: 95/5) copolymer was 290,000.

A solid freeform fabrication material having a filament-like form with a diameter of 1.75 mm was obtained in the same manner as in Example 1 except that 11-methacrylamide undecanoic acid-2-acrylamide-2-methylpropane

sulfonic acid (molar ratio: 95/5) copolymer was used instead of methacrylic acid-2-(diethylamino)ethyl homopolymer.

Example 17

380 g (2.4 mol) of 11-methacrylamide undecanoic acid, 27 g (0.13 mol) of 2-acrylamide-2-methylpropane sulfonic acid, 2.56 g (0.064 mol) of sodium hydroxide, and 3.95 g (0.024 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 30 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 11-methacrylamide undecanoic acid-2-acrylamide-2-methylpropane sulfonic acid (95/5) in molar ratio) copolymer. The weight average molecular weight of the thus-obtained 11-methacrylamide undecanoic acid-2-acrylamide-2-methylpropane sulfonic acid (molar ratio: 95/5) copolymer was 490,000.

A solid freeform fabrication material having a filament-like form with a diameter of 1.75 mm was obtained in the same manner as in Example 1 except that 11-methacrylamide undecanoic acid-2-acrylamide-2-methylpropane sulfonic acid (molar ratio: 95/5) copolymer was used instead of methacrylic acid-2-(diethylamino)ethyl homopolymer.

Example 18

380 g (2.28 mol) of 11-methacrylamide undecanoic acid, 57 g (0.253 mol) of decylmethacrylate, and 8.87 g (0.054 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 20 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 11-methacrylamide undecanoic acid-2-acrylamide-2-methylpropane sulfonic acid (90/10) in molar ratio) copolymer. The weight average molecular weight of the thus-obtained 11-methacrylamide undecanoic acid-2-acrylamide-2-methylpropane sulfonic acid (molar ratio: 90/10) copolymer was 200,000.

A solid freeform fabrication material having a filament-like form with a diameter of 1.75 mm was obtained in the same manner as in Example 1 except that 11-methacrylamide undecanoic acid-2-acrylamide-2-methylpropane sulfonic acid (molar ratio: 90/10) copolymer was used instead of methacrylic acid-2-(diethylamino)ethyl homopolymer.

Comparative Example 1

164 g (1.90 mol) of methacrylic acid, 193.5 g (1.90 mol) of methylmethacrylate, and 10.5 g (0.063 mol) of azobisisobutylonitrile were dissolved in 1.2 kg of methanol in a vessel. Nitrogen gas was blown into the solution for degassing for 60 minutes and the vessel was sealed by a septum followed by polymerization at 60 degrees C for 25 hours. After the polymerization reaction, the solution was dried with a reduced pressure. Thereafter, the resultant was dissolved in 1 kg of dimethylformamide and the thus-obtained solution was dripped to diethylether. The precipitate was collected by suction filtration to obtain 11-methacrylamide undecanoic acid-2-acrylamide-2-methylpropane sulfonic acid (50/50) in molar ratio) copolymer. The weight average molecular weight of the thus-obtained methacrylic acid-methylmethacrylate (molar ratio: 50/50) copolymer was 135,000.

A solid freeform fabrication material having a filament-like form with a diameter of 1.75 mm was obtained in the same manner as in Example 1 except that methacrylic acid-methylmethacrylate (molar ratio: 50/50) copolymer was used instead of methacrylic acid-2-(diethylamino)ethyl homopolymer.

Comparative Example 2

Methacrylic acid-methylmethacrylate (molar ratio: 50/50) copolymer was obtained in the same manner as in Comparative Example 1.

After the thus-obtained methacrylic acid-methylmethacrylate (molar ratio: 50/50) copolymer was dried at 50 degrees C for eight hours, the methacrylic acid-methylmethacrylate copolymer A and butylphenyl diphenylphosphate (plazticizer) B were mixed in a mass ratio (A/B) of 74/26. The mixture was mixed and extruded by a polymer extruder (HAAKE Mini Lab II, manufactured by Thermo Scientific) under the following conditions and the resultant was severed by a pair of scissors to manufacture a resin pellet.

Number of rotation of screw: 70 times per minute
Mixing temperature: 195 degrees C
Mixing time: three minutes

A solid freeform fabrication material having a filament-like form with a diameter of 1.75 mm was obtained in the same manner as in Example 1 except that the resin pellet was used instead of methacrylic acid-2-(diethylamino)ethyl homopolymer.

Comparative Example 3

OVA support filament (manufactured by LeapFrog) having no pH responsiveness was used as the solid freeform fabrication material having a filament-like form.

The compositions, the molar ratios (M1/M2), and the weight average molecular weights of the solid freeform fabrication materials having filament-like forms of Examples 1 - 18 and Comparative Examples 1 - 3 are shown in Table 1.

Table 1

| | | Monomer 1 (M1) | | Monomer 2 (M2) | Additive | Molar ratio (M1/M2) | Weight average molecular weight |
|---|---|---|---|---|---|---|---|
| | | Monomer | Number of carbon atoms in alkylene group | Monomer | | | |
| Example | 1 | Methacrylic acid-2-(diethylamino) ethyl | - | - | - | 100/0 | 120,000 |
| | 2 | 5-methacrylamide valeric acid | 4 | - | - | 100/0 | 120,000 |
| | 3 | 6-methacrylamide hexanoic acid | 5 | - | - | 100/0 | 130,000 |
| | 4 | 8-methacrylamide octylic acid | 7 | - | - | 100/0 | 140,000 |
| | 5 | 11-methacrylamide undecanoic acid | 10 | - | - | 100/0 | 150,000 |
| | 6 | 12-methacrylamide dodecanoic acid | 11 | - | - | 100/0 | 150,000 |
| | 7 | 12-methacrylamide | 11 | - | - | 100/0 | 150,000 |
| | 8 | 23-methacrylamide tricosanoic acid | 22 | - | - | 100/0 | 170,000 |
| | 9 | 11-methacrylamide undecanoic acid | 10 | 2-acrylamide-2-methyl propane sulfonic acid | - | 95/5 | 150,000 |
| | 10 | 11-methacrylamide undecanoic acid | 10 | 2-acrylamide-2-methyl propane sulfonic acid | - | 90/10 | 160,000 |
| | 11 | 11-methacrylamide undecanoic acid | 10 | 2-acrylamide-2-methyl propane sulfonic acid | - | 95/5 | 5,000 |

(continued)

| | | Monomer 1 (M1) | | Monomer 2 (M2) | Additive | Molar ratio (M1/M2) | Weight average molecular weight |
|---|---|---|---|---|---|---|---|
| | | Monomer | Number of carbon atoms in alkylene group | Monomer | | | |
| | 12 | 11-methacrylamide undecanoic acid | 10 | 2-acrylamide-2-methyl propane sulfonic acid | - | 95/5 | 29,000 |
| | 13 | 11-methacrylamide undecanoic acid | 10 | 2-acrylamide-2-methyl propane sulfonic acid | - | 95/5 | 52,000 |
| | 14 | 11-methacrylamide undecanoic acid | 10 | 2-acrylamide-2-methyl propane sulfonic acid | - | 95/5 | 81,000 |
| | 15 | 11-methacrylamide undecanoic acid | 10 | 2-acrylamide-2-methyl propane sulfonic acid | - | 95/5 | 110,000 |
| | 16 | 11-methacrylamide undecanoic acid | 10 | 2-acrylamide-2-methyl propane sulfonic acid | - | 95/5 | 290,000 |
| | 17 | 11-methacrylamide undecanoic acid | 10 | 2-acrylamide-2-methyl propane sulfonic acid | - | 95/5 | 490,000 |
| | 18 | 11-methacrylamide undecanoic acid | 10 | Decyl methacrylate | - | 90/10 | 200,000 |
| Comparative Example | 1 | Methacrylic acid | | Methyl methacrylate | - | 50/50 | 135,000 |
| | 2 | Methacrylic acid | | Methyl methacrylate | Butylphenyl diphenyl phosphate 26 percent by mass | 50/50 | 135,000 |
| | 3 | PVA support filament (manufactured by LeapFrog) | | | | - | - |

The thus-obtained solid freeform fabrication materials having filament-like forms were evaluated about "conveying (supplying) property", "discharging stability", and "removability". The results are shown in Table 2.

All of the filaments manufactured in Examples had dissolution starting points in a pH range of from 7.5 - 10.

The-thus-obtained solid freeform fabrication material having a filament-like form was stored in an environment of 25 degrees C and 20 percent RH or an environment of 40 degrees C and 90 percent RH using a constant temperature and constant hummidity tester (PL-3KP, manufactured by ESPEC Corp.).

Manufacturing of Solid Freeform Fabrication Object

PLA filament PRO (Manufactured by LeapFrog) was used as a solid freeform fabrication material and each of the solid freeform fabrication materials having filament-like forms of Examples 1 -18 and Comparative Examples 1 - 3 stored for seven days in each environment were used as a support forming material. Thereafter, using a solid freeform fabrication device (CREATR HS, manufactured by LeapFrog), the solid freeform fabrication object illustrated in FIGS. 1A to 1C were manufactured to evaluate the conveying (supplying) property and discharging stability of the filament. The fabrication temperature was 200 degrees C.

Conveying (Supplying) Property

Conveying (supplying) of the solid freeform fabrication material having a filament-like form during manufacturing of a solid freeform fabrication object was visually observed and the conveying (supplying) property of the filament was evaluated according to the following evaluation criteria.

Evaluation Criteria

E (Excellent): Fabricated with no disruption of filament conveying (supplying)
G (Good): Conveying (supplying) speed varies during fabrication but causing no practical problem
M (Marginal): Problem occurs during conveying (supplying), impossible to fabricate
P (Poor): Filament broke during setting of filament or too flexible to set

Discharging Stability

Discharging of the filament of the solid freeform fabrication material from the heating head in the device of manufacturing solid freeform fabrication objects was visually observed to evaluate discharging stability according to the following evaluation criteria.

Evaluation Criteria

E (Excellent): Not defective discharging but stable discharging is observed
G (Good): Discharging amount varies but fabrication is possible
M (Marginal): Defective discharging frequently occurs, resulting in defective fabrication
P (Poor): Impossible to discharge

Removability

The fabricated solid freeform fabrication object of Examples 1 - 18 and Comparative Examples 2 and 3 were dipped in a vessel containing 100 mL of a remover having a pH of 6.5, 7.0, 7.5, 8.0, 9.0, 10.0, 11.0, or 12.0 for 15 hours to confirm whether the support portion made of a solid freeform fabrication material (filament) was dissolved or peeled off. Removability was evaluated according to the following criteria. With regard to Comparative Example 1, no solid object was fabricated. Therefore, the solid freeform fabrication material (filament) of Comparative Example 1 was dipped in the vessel containing a remover for 15 hours in the same manner as in Examples 1 - 18 and Comparative Examples 2 and 3 to confirm whether support portion was dissolved or peeled off to evaluate the removability according to the following criteria. The remover was prepared and pH thereof was regulated by adding acetic acid, ammonium, and sodium hydroxide to highly pure water using a pH meter (HM-30R, manufactured by DKK-TOA CORPORATION).

Evaluation Criteria of Examples 1 to 18 and Comparative Examples 2 and 3

E (Excellent): Support portion are completely removed as a result of dissolution or peeling-off
G (Good): Support portion attached to surface of solid freeform fabrication object but can be scraped off and removed by a tooth brush

M (Marginal): Support portion is swollen and partially peeled-off but still remains
P (Poor): Support portion remains as is

Evaluation Criteria of Comparative Example 1

E (Excellent): Completely dissolved
M (Marginal): Swelling observed but filament remains maintaining its form
P (Poor): No swelling, no change

Table 2

| | Evaluation result | | | |
|---|---|---|---|---|
| | Low temperature (25 degrees C) low humidity (20 percent) storage | | High temperature (40 degrees C) low humidity (90 percent) storage | |
| | Conveying | Discharging | Conveying | Discharging |

| | | (supplying) property | stability | (supplying) property | stability |
|---|---|---|---|---|---|
| Example | 1 | G | E | G | G |
| | 2 | E | E | G | G |
| | 3 | E | E | G | G |
| | 4 | E | E | E | G |
| | 5 | E | E | E | G |
| | 6 | E | E | E | G |
| | 7 | E | E | E | G |
| | 8 | E | G | E | G |
| | 9 | E | E | E | G |
| | 10 | E | E | E | G |
| | 11 | G | G | G | G |
| | 12 | E | G | G | G |
| | 13 | E | G | E | G |
| | 14 | E | G | E | G |
| | 15 | E | E | E | G |
| | 16 | E | E | E | G |
| | 17 | E | G | E | G |
| | 18 | E | E | E | G |
| Comparative Example | 1 | P | - | P | - |
| | 2 | G | G | M | P |
| | 3 | E | G | M | M |

| | | Evaluation result | | | | | | | |
|---|---|---|---|---|---|---|---|---|---|
| | | Removability | | | | | | | |
| | | pH 6.5 | pH 7.0 | pH 7.5 | pH 8.0 | pH 9.0 | pH 10.0 | pH 11.0 | pH 12.0 |
| Example | 1 | P | P | E | E | E | E | E | E |
| | 2 | P | P | E | E | E | E | E | E |
| | 3 | P | P | E | E | E | E | E | E |
| | 4 | P | P | G | E | E | E | E | E |
| | 5 | P | P | G | E | E | E | E | E |

| | | | | | | | | | |
|---|---|---|---|---|---|---|---|---|---|
| | 6 | P | P | G | E | E | E | E | E |
| | 7 | P | P | G | E | E | E | E | E |
| | 8 | P | P | M | G | E | E | E | E |
| | 9 | P | P | E | E | E | E | E | E |
| | 10 | P | P | E | E | E | E | E | E |
| | 11 | P | P | E | E | E | E | E | E |
| | 12 | P | P | E | E | E | E | E | E |
| | 13 | P | P | E | E | E | E | E | E |
| | 14 | P | P | E | E | E | E | E | E |
| | 15 | P | P | E | E | E | E | E | E |
| | 16 | P | P | G | E | E | E | E | E |
| | 17 | P | P | M | G | E | E | E | E |
| | 18 | P | P | M | G | E | E | E | E |
| Comparative Example | 1 | P | P | P | P | P | M | G | E |
| | 2 | P | P | P | P | P | P | G | E |
| | 3 | G | G | G | G | G | G | M | M |

As seen in the evaluation results, according to the present disclosure, a solid freeform fabrication material is provided, which has excellent conveying property and discharging stability even when stored in a high temperature and high humidity environment and can be safely and easily dissolved and removed.

## Claims

**1.** A method of manufacturing a solid freeform fabrication object comprising:

using a solid freeform fabrication material as a support forming material (10) to support a solid freeform fabrication object (20); and
the solid freeform fabrication material having a dissolution starting point in a pH range of 7.5 - 10, wherein the dissolution starting point is a pH at which a solid freeform fabrication material starts being dissolved in an aqueous (W) solution at 25 °C while changing the pH of the aqueous solution (W) from acid to base, and wherein the solid freeform fabrication object is formed from another solid freeform fabrication material that has no dissolution starting point in the pH range 7.5 - 10.

**2.** The solid freeform fabrication method according to claim 1, wherein the solid freeform fabrication material comprises: a pH responsive resin including at least one of a hydrophobic alkyl group and a hydrophobic alkylene group and a structure unit demonstrating hydrophilicity in basic conditions.

**3.** The solid freeform fabrication method according to claim 2, wherein the pH responsive resin includes a structure unit represented by the following Chemical formula 1,

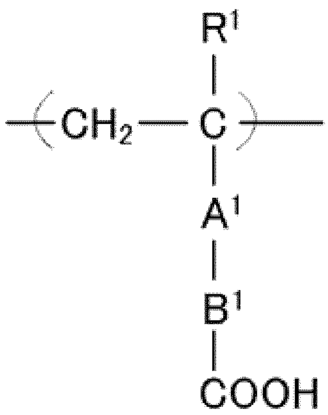

Chemical formula 1

where $R^1$ represents a hydrogen atom or a methyl group, $A^1$ represents -CO-O- or - CO-NH-, and $B^1$ represents an alkylene group having 4 - 23 carbon atoms.

**4.** The solid freeform fabrication method according to claim 3, wherein $B^1$ represents an alkylene group having 7 - 11 carbon atoms.

**5.** The solid freeform fabrication method according to claim 3 or 4, wherein the pH responsive resin includes a structure unit represented by the following Chemical formula 2,

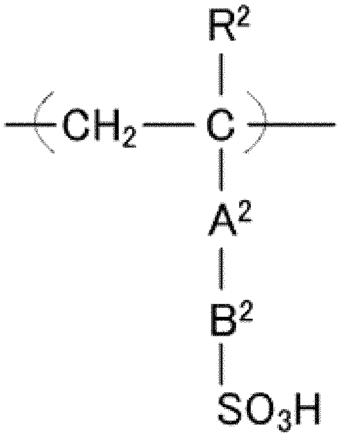

Chemical formula 2

where $R^2$ represents a hydrogen atom or a methyl group, $A^2$ represents -CO-O- or - CO-NH-, and $B^2$ represents an alkylene group having 1 - 4 carbon atoms.

**6.** The solid freeform fabrication method according to any one of claims 2 to 5, wherein the pH responsive resin has a weight average molecular weight of 100,000 - 300,000.

**7.** The solid freeform fabrication method according to any one of claims 2 to 6, wherein the pH responsive resin accounts for 50 - 100 percent by mass.

**8.** The method according to any one preceding claim, further comprising:
applying an aqueous solution (W) having a pH of from the dissolution starting point to 10 to dissolve and remove a portion constituted of the solid freeform fabrication material (10).

**9.** A solid freeform fabrication material set, comprising:

a solid freeform fabrication material for use as a support forming material (10) to support a solid freeform

fabrication object (20), the solid freeform fabrication material having a dissolution starting point in a pH range of 7.5 - 10;
a solid freeform fabrication material having no dissolution starting point in a pH range of 7.5 - 10; and
an aqueous solution (W) having a pH of from the dissolution starting point to pH 10, or a precursor material of the aqueous solution (W), wherein the dissolution starting point is a pH at which a solid freeform fabrication material starts being dissolved in an aqueous (W) solution at 25 °C while changing the pH of the aqueous solution (W) from acid to base.

**10.** A device of manufacturing a solid freeform fabrication object (20), comprising:

the solid freeform fabrication material set of claim 9; and
a heating head configured to melt and discharge the solid freeform fabrication material.

**Patentansprüche**

**1.** Verfahren zum Herstellen eines festen Freiformherstellungsobjekts, umfassend:

Verwenden eines festen Freiformherstellungsmaterials als ein eine Unterstützung bildendes Material (10) zum Tragen eines festen Freiformherstellungsobjekts (20); und
wobei das feste Freiformherstellungsmaterial einen Ausgangspunkt der Auflösung in einem pH-Bereich von 7,5 bis 10 aufweist, wobei der Ausgangspunkt der Auflösung ein pH-Wert ist, bei dem ein festes Freiformherstellungsmaterial beginnt, sich in einer wässrigen Lösung bei 25 °C aufzulösen, während der pH-Wert der wässrig Lösung von sauer zu basisch umschlägt, und wobei das feste Freiformherstellungsobjekt aus einem anderen festen Freiformherstellungsmaterial geformt wird, das keinen Ausgangspunkt der Auflösung im pH-Bereich von 7,5 bis 10 aufweist.

**2.** Verfahren zur festen Freiformherstellung nach Anspruch 1, wobei das feste Freiformherstellungsmaterial umfasst: ein auf pH ansprechendes Harz, einschließend mindestens eines von einer hydrophoben Alkylgruppe und einer hydrophoben Alkylengruppe und einer Struktureinheit, die unter basischen Bedingungen Hydrophilie zeigt.

**3.** Verfahren zur festen Freiformherstellung nach Anspruch 2, wobei das auf pH ansprechende Harz eine Struktureinheit einschließt, die durch die folgende chemische Formel 1 dargestellt wird:

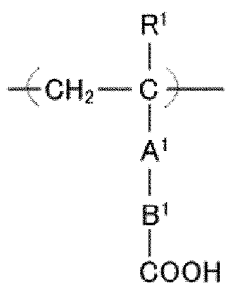

chemische Formel 1

wobei $R^1$ ein Wasserstoffatom oder eine Methylgruppe darstellt, $A^1$ -CO-O- oder - CO-NH- darstellt und $B^1$ eine Alkylengruppe mit 4 bis 23 Kohlenstoffatomen darstellt.

**4.** Verfahren zur festen Freiformherstellung nach Anspruch 3, wobei $B^1$ eine Alkylengruppe mit 7 bis 11 Kohlenstoffatomen darstellt.

**5.** Verfahren zur festen Freiformherstellung nach Anspruch 3 oder 4, wobei das auf pH ansprechende Harz eine Struktureinheit einschließt, die durch die folgende chemische Formel 2 dargestellt wird,

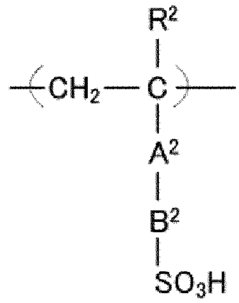

chemische Formel 2

wobei $R^2$ ein Wasserstoffatom oder eine Methylgruppe darstellt, $A^2$ -CO-O- oder - CO-NH- darstellt und $B^2$ eine Alkylengruppe mit 1 bis 4 Kohlenstoffatomen darstellt.

**6.** Verfahren zur festen Freiformherstellung nach Anspruch 2 bis 5, wobei das auf pH ansprechende Harz ein Gewichtsmittel des Molekulargewichts von 100000 bis 300000 aufweist.

**7.** Verfahren zur festen Freiformherstellung nach Anspruch 2 bis 6, wobei das auf pH ansprechende Harz 50 bis 100 Masseprozent ausmacht.

**8.** Verfahren nach einem der vorhergehenden Ansprüche, ferner umfassend:
Aufbringen einer wässrigen Lösung (W), die einen pH-Wert von dem Ausgangspunkt der Auflösung bis 10 aufweist, um einen aus dem festen Freiformherstellungsmaterial (10) bestehenden Teil aufzulösen und zu entfernen.

**9.** Satz eines festen Freiformherstellungsmaterials, umfassend:

ein festes Freiformherstellungsmaterial zur Verwendung als eine Unterstützung bildendes Material (10) zum Tragen eines festen Freiformherstellungsobjekts (20), wobei das feste Freiformherstellungsmaterial einen Ausgangspunkt der Auflösung in einem pH-Bereich von 7,5 bis 10 aufweist;
ein festes Freiformherstellungsmaterial, das keinen Ausgangspunkt der Auflösung in einem pH-Bereich von 7,5 bis 10 aufweist; und
eine wässrige Lösung (W), die einen pH-Wert von dem Ausgangspunkt der Auflösung bis pH 10 aufweist, oder ein Präkursormaterial der wässrigen Lösung (W), wobei der Ausgangspunkt der Auflösung ein pH-Wert ist, bei dem ein festes Freiformherstellungsmaterial beginnt, sich in einer wässrige Lösung (W) bei 25 °C aufzulösen, während der pH-Wert der wässrigen Lösung (W) von sauer zu basisch umschlägt.

**10.** Vorrichtung zur Herstellung eines festen Freiformherstellungsobjekts (20), umfassend:

den Satz des festen Freiformherstellungsmaterials nach Anspruch 9; und
einen Heizkopf, der konfiguriert ist, um das feste Freiformherstellungsmaterial zu schmelzen und auszutragen.

## Revendications

**1.** Procédé de fabrication d'un objet de fabrication de forme libre solide, comprenant:

l'utilisation d'un matériau de fabrication de forme libre solide en tant que matériau formant support (10) pour supporter un objet de fabrication de forme libre solide (20); et
le matériau de fabrication de forme libre solide ayant un point de début de dissolution dans une gamme de pH de 7,5 à 10, dans lequel le point de début de dissolution est un pH auquel un matériau de fabrication de forme libre solide commence à se dissoudre dans une solution aqueuse (W) à 25°C tout en changeant le pH de la solution aqueuse (W) d'acide à basique, et dans lequel l'objet de fabrication de forme libre solide est formé à partir d'un autre matériau de fabrication de forme libre solide qui n'a pas de point de début de dissolution dans la gamme de pH de 7,5 à 10.

**2.** Procédé de fabrication de forme libre solide selon la revendication 1, dans lequel le matériau de fabrication de forme

libre solide comprend:
une résine réagissant au pH incluant au moins l'un parmi un groupe alkyle hydrophobe et un groupe alkylène hydrophobe et une unité structurale présentant de l'hydrophilie dans des conditions basiques.

**3.** Procédé de fabrication de forme libre solide selon la revendication 2, dans lequel la résine réagissant au pH inclut une unité structurale représentée par la Formule chimique 1 suivante,

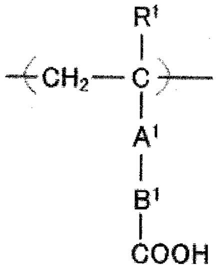

Formule chimique 1

dans laquelle $R^1$ représente un atome d'hydrogène ou un groupe méthyle, $A^1$ représente -CO-O- ou -CO-NH-, et $B^1$ représente un groupe alkylène ayant 4 à 23 atomes de carbone.

**4.** Procédé de fabrication de forme libre solide selon la revendication 3, dans lequel $B^1$ représente un groupe alkylène ayant 7 à 11 atomes de carbone.

**5.** Procédé de fabrication de forme libre solide selon la revendication 3 ou 4, dans lequel la résine réagissant au pH inclut une unité structurale représentée par la Formule chimique 2 suivante,

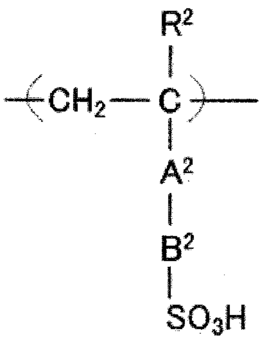

Formule chimique 2

dans laquelle $R^2$ représente un atome d'hydrogène ou un groupe méthyle, $A^2$ représente -CO-O- ou -CO-NH-, et $B^2$ représente un groupe alkylène ayant 1 à 4 atomes de carbone.

**6.** Procédé de fabrication de forme libre solide selon l'une quelconque des revendications 2 à 5, dans lequel la résine réagissant au pH a un poids moléculaire moyen en poids de 100000 à 300000.

**7.** Procédé de fabrication de forme libre solide selon l'une quelconque des revendications 2 à 6, dans lequel la résine réagissant au pH représente 50 à 100 pour cent en masse.

**8.** Procédé selon l'une quelconque des revendications précédentes, comprenant en outre:
l'application d'une solution aqueuse (W) ayant un pH à partir du point de début de dissolution jusqu'à 10 pour dissoudre et enlever une partie constituée du matériau de fabrication de forme libre solide (10).

**9.** Ensemble de matériau de fabrication de forme libre solide, comprenant:

un matériau de fabrication de forme libre solide pour l'utilisation en tant que matériau formant support (10) pour

supporter un objet de fabrication de forme libre solide (20), le matériau de fabrication de forme libre solide ayant un point de début de dissolution dans une gamme de pH de 7,5 à 10;
un matériau de fabrication de forme libre solide n'ayant pas de point de début de dissolution dans une gamme de pH de 7,5 à 10; et
une solution aqueuse (W) ayant un pH à partir du point de début de dissolution jusqu'au pH 10, ou une matière précurseur de la solution aqueuse (W), lequel point de début de dissolution étant un pH auquel un matériau de fabrication de forme libre solide commence à se dissoudre dans une solution aqueuse (W) à 25 °C tout en changeant le pH de la solution aqueuse (W) d'acide à basique.

**10.** Dispositif de fabrication d'un objet de fabrication de forme libre solide (20), comprenant:

l'ensemble de matériau de fabrication de forme libre solide selon la revendication 9; et
une tête chauffante configurée pour faire fondre et rejeter le matériau de fabrication de forme libre solide.

FIG. 1A

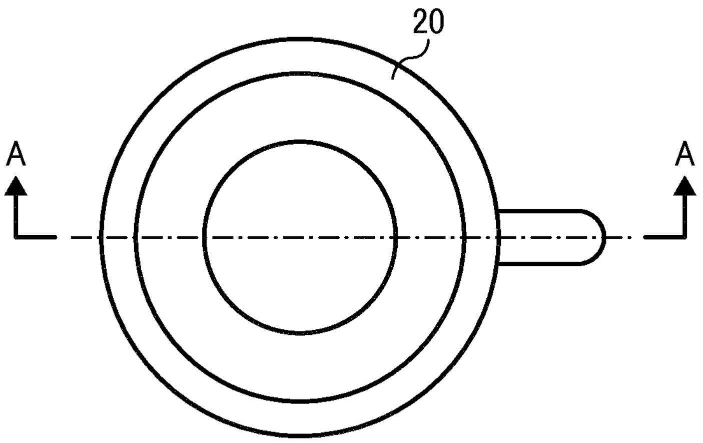


FIG. 1B

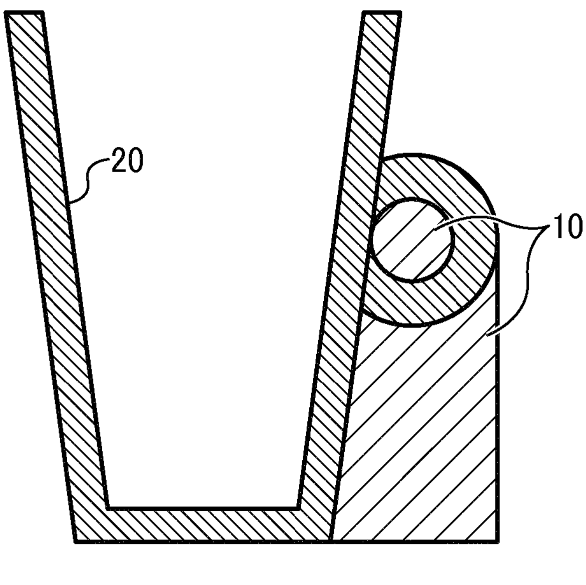

FIG. 1C

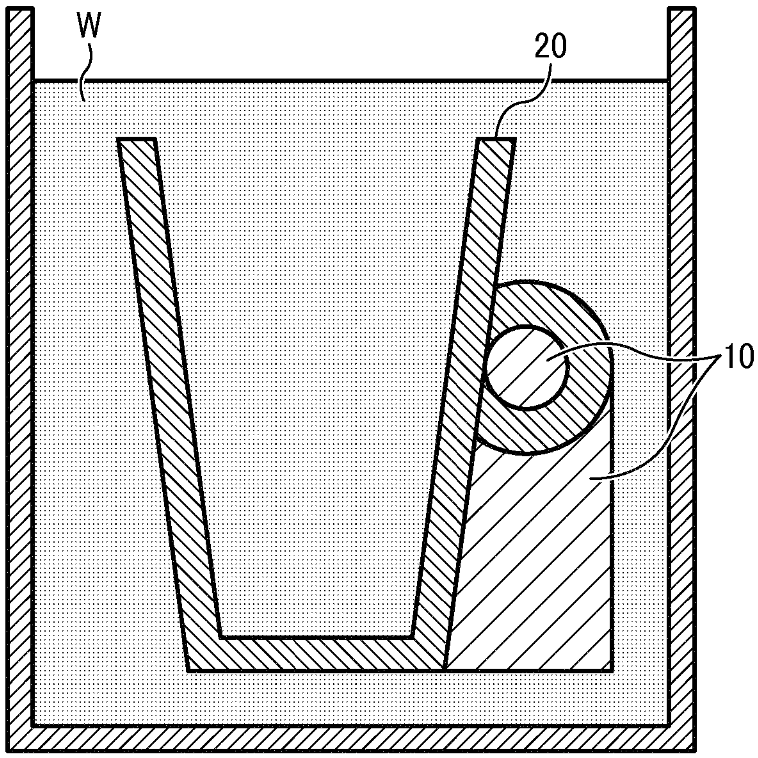

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 103093965
- EP 1803750 A
- US 20140326458 A
- US 20050200039 A
- WO 2015108768 A